# EUROPÄISCHE PATENTANMELDUNG

(11) **EP 1 050 706 A2**
(43) Veröffentlichungstag der Anmeldung: **08.11.2000**
(21) Anmeldenummer: 00107617.3
(22) Anmeldetag: 08.04.2000
(51) Int. Cl.: F16L 41/02

(54) **Steinzeugrohr**

(30) Priorität: 04.05.1999 DE 19920474
(71) Anmelder: Steinzeug Abwassersysteme GmbH, 50858 Köln (DE)
(72) Erfinder: Hillebrand, Ludger, 06905 Scholis (DE); Hofmann, Martin Dr., 50129 Bergheim-Gless (DE)
(74) Vertreter: Patentanwälte Dr. Solf & Zapf

(57) **Zusammenfassung**

Die Erfindung betrifft ein Steinzeugrohr mit Stutzen im wesentlichen aufweisend ein Standrohr (21) mit einer Standrohrmuffe (24) und ein seitlich abgewinkelt angesetztes Stutzenrohr (40) mit einer Stutzenmuffe (39), wobei in der Standrohrmuffe (24) ein Muffenboden (30) mit einer Innenkante (31) und einer Außenkante (33) und in der Stutzenmuffe (39) ein Muffenboden (44) mit einer Innenkante (45) und einer Außenkante (48) eingeformt sind, und vorzugsweise im Übergangsbereich zwischen dem Standrohr (21) und der Standrohrmuffe (24) sowie dem Stutzenrohr (40) und der Stutzenmuffe (39) jeweils ein Übergangskonusstück (27) bzw. (42) angeformt ist, und wobei der Stutzen (37) lückenlos in einem Anbindungsbereich (51) an die Standrohrmuffe (24) und das Standrohr (21) angeformt ist.

## Beschreibung

Die Erfindung betrifft ein Steinzeugrohr mit Abzweigstutzen.

Steinzeugrohre mit Abzweigstutzen werden hergestellt, indem eine portionierte Masse, ein sogenannter Hubel, aus einer bildsamen, feuchten, homogenen, keramischen Masse aus im wesentlichen Ton in eine mehrteilige Form eingebracht, die Form geschlossen und ein Steinzeugrohrrohling unter Preßdruck ausgeformt wird. Dieser sogenannte grüne Steinzeugrohrrohling wird über längere Zeit kontrolliert getrocknet und anschließend kontrolliert bei über 1000°C mehrere Stunden im Keramikofen gebrannt. Beim Brennen entstehen im Tonmaterial Schmelzphasen, die nach dem Brennen und Abkühlen die Verfestigung des Steinzeugrohres bewirken.

Beim Brennen der keramischen Masse des Steinzeugrohres ist darauf zu achten, daß nicht zu wenig und nicht zu viel Schmelzphase entsteht, weil andernfalls entweder das gebrannte Steinzeugrohr keine ausreichende Festigkeit aufweist oder sich die Raumform verzieht, so daß genormte Abmessungen des Steinzeugrohres nicht gewährleistbar sind.

Bei der Formgebung des Steinzeugrohres wird nicht nur auf die Homogenität der keramischen Masse sondern auch auf gleichmäßige Wandungsdicken geachtet, damit eine gleichmäßige Trocknung bewirkt werden kann und kontrollierbare Reaktionen in der Masse beim Brennen ablaufen können. Ungleichmäßige Wandungen und/oder Materialanhäufungen können beim Trocknen zu Rissen in den Wandungen und auch zum Verziehen der Raumform beim Brennen führen.

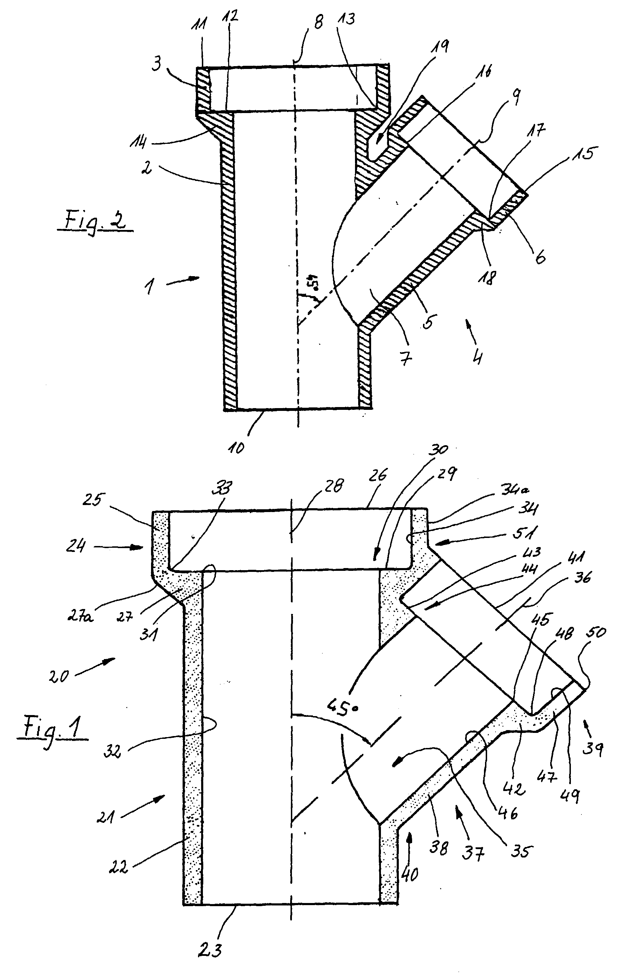

Eine übliche Raumform eines Steinzeugrohres mit Abzweigstutzen und genormten Abmessungen ist in Fig. 2 abgebildet. Das Steinzeugrohr 1 besteht aus dem zylindrischen Standrohr 2 und der zylindrischen Standrohrmuffe 3 sowie dem Abzweigstutzen 4 mit zylindrischem Stutzenrohrstück 5 und zylindrischer Stutzenmuffe 5. Der Innenraum des Stutzens 4 mündet über ein Loch 7 in der Standrohrmantelwandung in den Innenraum des Standrohres 2 in festgelegter Höhe des Standrohres, wobei die Zylinderachse 9 des Stutzens 4 in einem Winkel von 45° zur Zylinderachse 8 des Standrohres angeordnet ist und sich die Achsen 8, 9 kreuzen.

Das Standrohr 2 weist ein sogenanntes Spitzende und gegenüberliegend das Muffenende mit der Standrohrmuffe 3 mit dem Muffenrand 11 und im Überangsbereich vom Standrohr 2 zur Standrohrmuffe 3 im Innern der ringförmigen, rechtwinklig zur Zylinderachse 8 angeordneten Standrohransatzfläche 12 für das Spitzende eines weiteren Steinzeugrohres auf. Die Ringeckenkante 13 zwischen der Wandung der Standrohrmuffe 3 und der Ansatzfläche 12 ist leicht abgerundet ausgebildet, wobei aus Festigkeitsgründen unterhalb der Ansatzflächen 12 ein konisches Übergangsstück 14 vorgesehen ist.

Der Stutzen 4 weist den Muffenrand 15 und im Übergangsbereich zum Stutzenrohrstück 5 im Innern eine ringförmige Stutzenansatzflache 16 auf, die rechtwinklig zur Zylinderachse 9 angeordnet ist und gegen die das Spitzende eines weiteren Steinzeugrohres setzbar ist.

Die Ringeckenkante 17 zwischen der Wandung der Stutzenmuffe 6 und der Stutzenansatzfläche 16 ist ebenfalls leicht abgerundet. Unterhalb der Stutzenmantelfläche 16 ist ein konisches Übergangsstück 18 ausgeformt, das die Muffe gegen das Rohr abstützt.

Das bekannte Steinzeugrohr 1 weist im wesentlichen eine gleichmäßige Wandstärke auf. Zwischen dem Stutzen 4 und dem Standrohr 2 ist eine Lücke bzw. ein Freiraum 19 vorgesehen, damit ein gleichmäßiges Trocknen und Brennen möglich ist. Außerdem ermöglicht der Freiraum 19 das Nacharbeiten der Raumform außenseitig nach dem Pressen und Entformen auf Maßhaltigkeit und das Verputzen der Muffen 3, 6.

Das bekannte Steinzeugrohr mit Stutzen ist jahrzehntelang hergestellt worden, obwohl es mit einer Vielzahl von Nachteilen behaftet ist. Zum einen ist die Form zum Pressen des Steinzeugrohres im Bereich des Freiraums 19 kompliziert ausgebildet. Außerdem kragt der Stutzen relativ weit frei aus, seine Ansatzstelle am Standrohr ist relativ schwach; es kann bei der Handhabung leicht zum Bruch kommen. Das Vorkragen erhöht auch die Anstoßgefahr mit der Folge von Bruch. Aufgrund seines Gewichts und des relativ langen Krag-Hebelarms kann es beim Trocknen und Brennen durch Einwirkung der Schwerkraft zum Verbiegen des Stutzens kommen, woraus mangelhafte Maßhaltigkeit und sogar Ausschuß resultieren können. Das relativ weite Auskragen erfordert entsprechenden Raum im Trocken- und Brennofen sowie beim Verlegen der fertigen Steinzeugrohre. Es bewirkt außerdem einen relativ hohen Gewichtsanteil, was die Handhabung beeinträchtigt und erfordert relativ viel Rohstoff sowie entsprechend hohe Trocken- und Brennenergie.

Aufgabe der Erfindung ist, ein Steinzeugrohr mit Stutzen zu schaffen, das mit höherer Maßhaltigkeit und mit einer einfacheren Form problemlos herstellbar, leichter, robuster, einfacher handhabbar und weniger sperrig ist sowie weniger Rohstoff und Wärmeenergie erfordert.

Diese Aufgabe wird durch die Merkmale des Anspruchs 1 gelöst.

Anhand der Zeichnung wird die Erfindung im folgenden beispielhaft näher erläutert. Es zeigen:
- Fig. 1: einen Längsschnitt durch ein erfindungsgemäßes Steinzeugrohr;
- Fig. 2: einen Längsschnitt durch ein bekanntes Steinzeugrohr.

Das erfindungsgemäße Steinzeugrohr 20 mit Stutzen 37 weist das zylindrische Standrohr 21 mit der Standrohrwandung 22 und dem Spitzende 23 sowie die zylindrische Standrohrmuffe 24 etwas größeren Durchmessers mit der Standrohrmuffenwandung 25 und dem Muffenrand 26 auf. Im Übergangsbereich zwischen Standrohrmuffenwandung 25 und Standrohrwandung 22 ist zur Abstützung der Muffe ein Übergangskonusstück 27, vorzugsweise mit einem Konuswinkel von 45° zur Standrohrzylinderachse 28 angeformt. Standrohrmuffe 25 und Standrohr 21 haben eine gemeinsame Zylinderachse 28. Der Muffenboden 30 der Standrohrmuffe 24 wird von einer ebenen rechtwinklig zur Zylinderachse 28 ausgerichteten Ringfläche 29 gebildet, deren Innenkante 31 mit der Innenmantelfläche 32 des Standrohres 21 und deren Außenkante 33 mit der Innenmantelfläche 34 der Standrohrmuffe 24 fluchten. Die Wandungen 22 und 25 des Standrohres 1 sind zweckmäßigerweise im wesentlichen gleich dick, wobei zu berücksichtigen ist, daß keramische Produkte herstellungsbedingt üblicherweise größere Toleranzen aufweisen als Produkte, die aus Metall hergestellt sind.

In der Wandung 22 ist in einem vorbestimmten Bereich ein Loch 35 vorgesehen. Durch das Zentrum des Lochs 35 läuft die Zylinderachse 36 des Stutzens 37, der in einem Winkel von 45° angesetzt ist, wobei sich die Zylinderachsen 28, 36 im Winkel von 45° kreuzen.

Der Stutzen 37 weist das Stutzenrohr 40 mit der Stutzenrohrwandung 38 sowie die Stutzenmuffe 39 mit der Stutzenmuffenwandung 47 und dem Stutzenmuffenrand 41 mit einer Außenrandkante 50 auf. Der Übergangsbereich zwischen Stutzenmuffe 39 und Stutzenrohr 40 ist als Übergangskonusstück 42 ausgebildet. Der Stutzenmuffenboden 44 ist eine ebene, rechtwinklig zur Stutzenzylinderachse 36 ausgerichtete Ringfläche 43, deren Innenkante 45 mit der Innenmantelfläche 46 des Stutzenrohres 40 und deren Außenkante 48 mit der Innenmantelfläche 49 der Stutzenmuffe 39 fluchten. Zweckmäßigerweise sind die Wandungen 38, 40 des Stutzens 37 gleich dick und auch gleich dick wie die Wandungen 22, 25 des Standrohres 21.

Insoweit entspricht das Steinzeugrohr 20 dem Stand der Technik und genormten Abmessungen.

Wesentlich ist, daß der Stutzen 37 im Vergleich zum Stand der Technik kürzer ausgeführt und näher an die Standrohrmuffe 24 herangerückt angeformt ist. Dementsprechend befindet sich das Zentrum des Lochs 35 näher an der Standrohrmuffe 24. Dabei sind die Stutzenmuffenwandung 47 und die Stutzenrohrwandung 38 an das Stutzenrohrübergangskonusstück 27 lückenlos bzw. freiraumfrei angeformt. Durch diese Anbindung bzw. Anformung findet der Stutzen 37 Halt am Standrohr 21 im Bereich des Übergangskonusstücks 27.

Besonders vorteilhaft ist, wenn sich die Innenmantelfläche 49 der Stutzenmuffe 39 im Anbindungsbereich 51 parallel zur Außenmantelfläche 27a des Übergangskonusstücks 27 mit dem Konuswinkel von 45° zur Standrohrzylinderachse 28 erstreckt. Zur Optimierung der tragenden Materialmenge im Anbindungsbereich 51 bezüglich Reduzierung der Materialmenge insgesamt und Erhöhung des Anbindungsvolumens ist vorgesehen, daß die Außenkante 33 des Muffenbodens 30 so nahe wie möglich an die Innenmantelfläche 49 der Stutzenmuffenwandung 47 herangerückt ist. Vorzugsweise beträgt der Abstand der Außenkante 33 von der Innenmantelfläche 49 etwa oder gleich der Wandstärke des Steinzeugrohres 20. Zum gleichen Zweck ist die Außenkante 48 des Muffenbodens 44 so nahe wie möglich an die Innenmantelfläche 32 des Standrohres 21 herangerückt, wobei deren Abstand ebenfalls der Wandstärke des Steinzeugrohres 20 gleich ist oder ihr entspricht.

Nach einer weiteren bevorzugten Ausführungsform der Erfindung geht die Außenrandkante 50 des Muffenrandes 41 der Muffe 39 in die Außenmantelfläche 34a der Standrohrmuffenwandung 25 über.

Insbesondere durch diese Optimierungen entstehen keine schädlichen Materialanhäufungen; denn Wandungsbestandteile von Standrohrelementen bilden auch Wandungsbestandteile von Stutzenelementen in Materialunion. Das neue Steinzeugrohr 20 ist dadurch erheblich kompakter ausgebildet mit reduzierter Bruchanfälligkeit. Durch die Anbindung des Muffenbereichs des Stutzens an den Muffenbereich des Standrohres findet der auskragende Stutzen Halt gegen Verformungen beim Trocknen und Brennen, wenn der Steinzeugrohrrohling auf dem Muffenende oder dem Spitzende stehend durch die Aggregate befördert wird.

## Patentansprüche

1. Steinzeugrohr mit Stutzen im wesentlichen aufweisend ein Standrohr (21) mit einer Standrohrmuffe (24) und ein seitlich abgewinkelt angesetztes Stutzenrohr (40) mit einer Stutzenmuffe (39), wobei in der Standrohrmuffe (24) ein Muffenboden (30) mit einer Innenkante (31) und einer Außenkante (33) und in der Stutzenmuffe (39) ein Muffenboden (44) mit einer Innenkante (45) und einer Außenkante (48) eingeformt sind, und vorzugsweise im Übergangsbereich zwischen dem Standrohr (21) und der Standrohrmuffe (24) sowie dem Stutzenrohr (40) und der Stutzenmuffe (39) jeweils ein Übergangskonusstück (27) bzw. (42) angeformt ist,
**dadurch gekennzeichnet,** daß der Stutzen (37) lückenlos in einem Anbindungsbereich (51) an die Standrohrmuffe (24) und das Standrohr (21) angeformt ist.

2. Steinzeugrohr nach Anspruch 1,
**dadurch gekennzeichnet,** daß der Stutzen (37) im Bereich des Übergangskonusstücks (27) des Standrohres (21) angeformt ist.

3. Steinzeugrohr nach Anspruch 1 und/oder 2,
**dadurch gekennzeichnet,** daß sich die zylindrische Innenmantelfläche (49) der Stutzenmuffe (39) parallel zur Außenmantelfläche (27a) des Übergangskonusstücks (27) erstreckt.

4. Steinzeugrohr nach einem oder mehreren der Ansprüche 1 bis 3,
**dadurch gekennzeichnet,** daß die Materialmenge im Anbindungsbereich (51) minimiert ist, indem der Abstand der Außenkante (33) des Muffenbodens (30) von der Innenmantelfläche (49) der Stutzenmuffe (39) der hauptsächlichen Wandstärke des Steinzeugrohres entspricht.

5. Steinzeugrohr nach einem oder mehreren der Ansprüche 1 bis 4, insbesondere nach Anspruch 4,
**dadurch gekennzeichnet,** daß zur Minimierung der Materialmenge im Anbindungsbereich (51) der Abstand der Außenkante (48) des Stutzenmuffenbodens (44) von der Innenmantelfläche (32) des Standrohres (21) der hauptsächlichen Wandstärke des Steinzeugrohres entspricht.

6. Steinzeugrohr nach einem oder mehreren der Ansprüche 1 bis 5,
**dadurch gekennzeichnet,** daß der Stutzenmuffenrand (41) im Anbindungsbereich (51) an die Außenmantelfläche (34a) der Standrohrmuffe (24) angrenzt.
